# FASCICULE DE BREVET EUROPEEN

(11) **EP 1 979 641 B1**
(45) Date de publication et mention de la délivrance du brevet: **27.05.2009**
(21) Numéro de dépôt: 07731516.6
(22) Date de dépôt: 24.01.2007
(51) Int. Cl.: F16D 13/48

(54) **ENSEMBLE DE TRANSMISSION DE COUPLE POUR BOITE DE VITESSES**
DREHMOMENT-ÜBERTRAGUNGSANORDNUNG FÜR EIN GETRIEBE
TORQUE-TRANSMITTING ASSEMBLY FOR GEARBOX

(30) Priorité: 31.01.2006 FR 0600870
(43) Date de publication de la demande: 15.10.2008
(73) Titulaire: Renault SAS, 92100 Boulogne Billancourt (FR)
(72) Inventeur: RAOUL, Michel, F-78990 Elancourt (FR)
(86) Numéro de dépôt international: PCT/FR2007/050688
(87) Numéro de publication internationale: WO 2007/088297

(56) Documents cités:
- EP-A- 1 555 450
- DE-A1- 19 848 582
- DE-C- 894 653

## Description

La présente invention a pour objet un ensemble de transmission de couple pour boîte de vitesses de véhicule automobile du type comprenant un embrayage à disque de friction et un double volant amortisseur de vibrations pour la transmission du couple provenant du moteur d'entraînement du véhicule automobile vers la boîte de vitesses. Un tel ensemble selon le preambule de la revendication 1 est connu de EP-A1-1 555 450.

On sait en effet qu'il est nécessaire de filtrer les oscillations de torsion qui pourraient être transmises du volant moteur à la boîte de vitesses du véhicule automobile. Dans ce but, on utilise généralement un dispositif d'amortissement des oscillations de torsion comprenant un double volant amortisseur constitué par deux éléments de volants d'inertie séparés, accouplés entre eux par des éléments de raideur et d'amortissement comprenant des ressorts.

L'embrayage assurant la transmission du couple est de préférence du type comportant un disque de friction qui peut être serré entre un plateau de pression fixe axialement et un plateau de pression mobile déplaçable axialement.

L'actionnement du plateau de pression mobile permet par exemple de faire passer l'embrayage, de sa position embrayée dans laquelle le disque de friction est serré entre les deux plateaux, à une position débrayée dans laquelle le disque de friction peut au contraire tourner librement par rapport aux plateaux de pression. L'actionnement peut également avoir un effet inverse et faire passer l'embrayage d'une position débrayée à une position embrayée.

Une telle commande d'actionmement est utilisée lors des changements de rapports de la boîte de vitesses pour équilibrer la vitesse de rotation du vilebrequin du moteur d'entraînement du véhicule et de l'arbre primaire de la boîte de vitesses sur lequel l'ensemble d'embrayage se trouve monté.

Afin d'obtenir une pression de serrage suffisante sur le disque de friction de l'embrayage, on prévoit généralement un piston hydraulique pour commander le déplacement d'un organe de commande. Toutefois, l'utilisation d'un tel piston nécessite de prévoir des conduites d'alimentation, un distributeur de fluide hydraulique ainsi qu'une chambre de commande et de compensation. L'implantation de ces éléments à l'intérieur du carter de la boîte de vitesses peut être relativement difficile et augmente sensiblement le volume total de la transmission.

On peut actionner un embrayage de ce type au moyen d'une commande purement mécanique, l'embrayage étant alors serré par l'action de moyens élastiques du type ressort. Pour obtenir néanmoins une transmission de couple convenable, il est nécessaire de prévoir des ressorts de forte puissance et donc d'un encombrement relativement important.

La présente invention a pour objet de remédier à ces inconvénients en proposant un ensemble de transmission de couple pour boîte de vitesses avec un embrayage à disque de friction associé à un volant amortisseur de vibrations, l'ensemble étant particulièrement compact et de conception simple tout en assurant une excellente transmission du couple moteur vers la boîte de vitesses.

L'invention a également pour objet de permettre un fonctionnement uniforme d'un tel ensemble de transmission de couple quelles que soient les différences d'épaisseur entre les volants amortisseurs selon leur fabrication et quelles que soient les éventuelles variations de positions relatives axiales des éléments les uns par rapport aux autres.

Dans un mode de réalisation, un ensemble de transmission de couple pour boîte de vitesses de véhicule automobile comprend un embrayage à disque de friction et un volant amortisseur de vibrations capable d'entraîner en rotation un élément d'entrée de l'embrayage. L'embrayage comprend un plateau de pression fixe axialement et un plateau de pression mobile déplaçable axialement sous l'action d'un organe d'actionnement. Les deux plateaux de pression sont capables d'enserrer le disque de friction. Des moyens de sollicitation élastique sont prévus pour serrer les deux plateaux de pression l'un vers l'autre. Les deux plateaux sont par ailleurs entraînés en rotation autour du même axe.

Des moyens d'amplification de l'effort de serrage sur le plateau de pression mobile sont également prévus. Ces moyens d'amplification d'effort constituent des moyens d'auto-assistance qui, combinés aux moyens de sollicitation élastique à la précharge modérée, permettent d'atteindre une pression suffisante sur le disque de friction pour transmettre le couple moteur. L'effort de serrage peut être appliqué par l'organe d'actionnement.

Les moyens d'amplification d'effort sont montés, par exemple, entre le plateau de pression mobile et l'élément d'entrée de l'embrayage.

Les moyens d'amplification d'effort peuvent comprendre chacun au moins une rampe inclinée apte à coopérer avec au moins une rampe complémentaire du moyen d'amplification. De cette manière, lorsque le couple moteur transite par ces rampes inclinées, celles-ci génèrent un effort axial tendant à les écarter les unes des autres. Cet effort amplifie le serrage du plateau mobile et du disque de friction contre le plateau fixe.

Dans un mode de réalisation avantageux, les moyens de sollicitation élastique sont montés sur un organe d'actionnement, en forme de cloche mobile axialement et fixée à la périphérie du plateau de pression mobile.

Les moyens de sollicitation élastique peuvent comprendre par exemple plusieurs ressorts montés entre l'élément d'entrée et le plateau de pression mobile de façon à exercer un effort axial tendant à écarter le plateau de pression mobile de l'élément d'entrée.

Les ressorts peuvent être des ressorts hélicoïdaux montés autour de pions de centrage orientés axialement.

On peut également utiliser une ou plusieurs rondelles élastiques montées dans les mêmes conditions.

Pour l'actionnement de l'embrayage, en vue du débrayage, l'organe d'actionnement vient agir sur un palier à roulement dont l'écartement axial par rapport au volant amortisseur est avantageusement déterminé par une rondelle de réglage. Il est ainsi possible de placer ce roulement en position axiale précise par rapport à la face d'appui du volant sur le vilebrequin du moteur du véhicule. Les dispersions d'épaisseur rencontrées lors de la fabrication des volants amortisseurs ne sont plus en mesure d'avoir une influence sur l'actionnement de l'embrayage.

L'élément d'entrée de l'embrayage est avantageusement supporté par le volant amortisseur par l'intermédiaire d'un palier à roulement. A cet effet, l'élément d'entrée comporte un moyeu de guidage pour le montage de ce palier.

Pour améliorer le guidage, ce palier à roulement comprend de préférence deux roulements qui peuvent être disposés avec un écartement pour augmenter la longueur de guidage.

Ce palier à roulement est de préférence maintenu en place par un organe élastique capable d'exercer une précharge axiale et tendant à rapprocher l'embrayage du volant amortisseur. Ainsi, la durée de vie du palier est augmentée et le bruit de roulement diminué. Enfin, l'ensemble de l'embrayage est rappelé vers le volant amortisseur.

L'invention sera mieux comprise à l'étude d'un mode de réalisation décrit à titre d'exemple nullement limitatif et illustré par les dessins annexés sur lesquels :
- la figure 1 illustre en coupe partielle un ensemble de transmission de couple monté à l'une des extrémités d'une boîte de vitesses partiellement représentée, l'embrayage étant montré en position serrée correspondant à la phase d'embrayage,
- la figure 2 est une coupe selon II-II de la figure 1 montrant partiellement en vue agrandie un moyen d'amplification d'effort de serrage, et
- la figure 3 est une vue en coupe analogue à la figure 1 montrant l'embrayage en position desserrée correspondant à une phase de débrayage.

Tel qu'il est illustré sur les figures, l'ensemble de transmission de couple comprend un double volant amortisseur référencé 1 dans son ensemble et un embrayage référencé 2 dans son ensemble montés coaxialement sur l'arbre primaire 3 d'une boîte de vitesses. L'ensemble constitué par le volant amortisseur 1 et l'embrayage 2 est monté dans un carter d'embrayage 4 qui sert également de support pour l'arbre primaire 3 de la boîte de vitesses par l'intermédiaire d'un palier à rouleaux 5 avec un joint d'étanchéité dynamique 6 assurant l'étanchéité entre la boîte de vitesses d'une part, et l'ensemble de transmission de couple comprenant le volant amortisseur et l'embrayage 2 d'autre part. Le carter d'embrayage 4 supporte également un arbre secondaire 7 de la boîte de vitesses par un palier à rouleaux 8 ainsi qu'un arbre intermédiaire 9.

Le volant 1 se présente sous la forme d'un flasque radial 10 fixé au vilebrequin 11 du moteur, dans sa partie au voisinage de l'axe, par des vis 12. Au voisinage de sa périphérie radialement externe, le flasque 10 porte une couronne de démarreur 13 solidaire d'une portion cylindrique 14 faisant partie du flasque 10 du volant 1. La portion 14 comporte une couronne crénelée 15 qui joue le rôle de cible pour un capteur non représenté utilisé pour la commande d'allumage et de régime de rotation du moteur. Une pluralité de ressorts hélicoïdaux 16 de forme courbe sont montés dans un plan radial et permettent l'amortissement des vibrations par le volant amortisseur 1. L'ensemble comprenant le flasque 10 du volant 1 et les différents ressorts 16 constitue l'inertie primaire du volant amortisseur 1. Les différents ressorts 16, généralement au nombre de deux, répartis sur la périphérie du volant 1, sont montés dans des gaines d'étanchéité 17 capables de retenir un lubrifiant généralement constitué par de la graisse et servant à la réduction des frottements secs des ressorts 16 provoqués par la force centrifuge lors de la rotation du volant amortisseur 1. Le maintien des ressorts 16 et des gaines d'étanchéité 17 est assuré par un couvercle de fermeture 18 de structure annulaire, fixé à la portion cylindrique 14 par des vis 19 qui assurent le maintien des ressorts 16 et des gaines d'étanchéité 17 à l'encontre du flasque 10.

Le flasque 10 du volant 1 et le couvercle de fermeture 18 forment des volumes intérieurs en forme de tores adaptés à la réception des ressorts 16. Ces volumes intérieurs sont séparés par des excroissances en vis-à-vis disposées à l'intérieur du tore délimité par la portion cylindrique 14 du flasque 10 du volant 1 et par le couvercle de fermeture 18. Ces excroissances entraînent les ressorts 16 dans les deux sens de rotation.

La transmission du mouvement de rotation du flasque 10 est assurée par un flasque d'entraînement 20 relié à l'embrayage 2 et assurant son entraînement en rotation. Le flasque d'entraînement 20 de l'embrayage 2 est de forme circulaire et possède également sur sa périphérie des excroissances radiales 21 dont la largeur est équivalente à celles du flasque 10 et du couvercle de fermeture 18 et qui se trouvent en vis-à-vis de ces dernières en position de repos. Le flasque d'entraînement 20 est donc lui-même entraîné en rotation par les ressorts 16. Dans la zone périphérique radialement interne du flasque d'entraînement 20 sont prévus des trous 22 qui reçoivent des pions 23 assurant l'entraînement de l'embrayage 2.

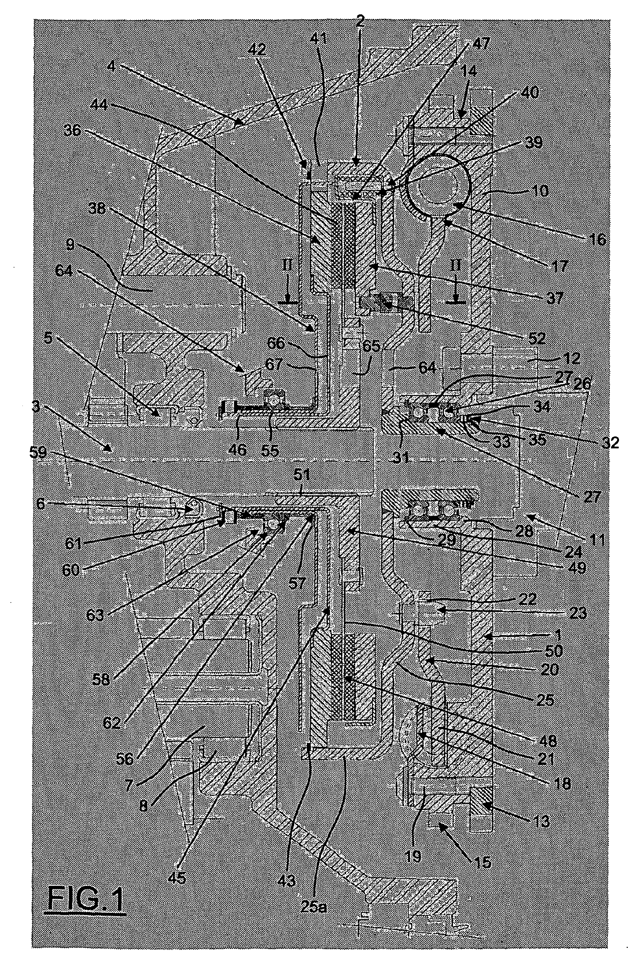

Le flasque 10 du volant 1 présente, dans sa partie centrale, un manchon axial cylindrique 24 qui reçoit des éléments de guidage d'un élément d'entrée 25 en forme de cloche de l'embrayage 2. Ces éléments de guidage comprennent dans l'exemple illustré deux roulements de guidage étanches à billes 26 séparés par une entretoise 27 augmentant la longueur de guidage. Les roulements 26 sont bloqués sur la droite par rapport à la figure 1 par un épaulement 28 du manchon 24 et sur la gauche par un anneau d'arrêt 29.

L'embrayage 2 comprend un élément d'entrée 25, en forme de cloche présentant une partie en tôle s'étendant de manière sensiblement radiale et une partie cylindrique axiale 25a à sa périphérie. La concavité de l'élément 25 est dirigée à l'opposé du volant 1. L'élément d'entrée 25 est fixé, par exemple par soudure, à un moyeu central de guidage 27 qui présente une surface cylindrique extérieure recevant les paliers à roulement 26. Les paliers à roulement 26 sont en appui à gauche sur la figure 1 contre un épaulement 31 du moyeu 27 et sont maintenus sur la droite par un ensemble de butée 32 comprenant une rondelle élastique ondulée 33, une rondelle annulaire d'appui 34 et un anneau d'arrêt 35. L'ensemble de butée 32 maintient axialement l'élément d'entrée 25 de l'embrayage 2 par rapport au volant 1 et permet d'appliquer une précharge contrôlée sur les roulements de guidage 26 afin d'améliorer leur durée de vie et de réduire leur bruit de roulement. De plus, l'ensemble de butée 32, grâce à l'existence de la rondelle élastique 33, exerce un rappel de l'ensemble de l'embrayage 2 en direction du volant 1, l'effort élastique s'exerçant de façon à rapprocher axialement l'embrayage 2 du volant 1.

L'élément d'entrée 25 présente, dans sa partie radiale, des trous de montage pour les pions 23 servant à l'entraînement de l'embrayage 2 par le flasque d'entraînement 20.

L'embrayage 2 comprend également un plateau de pression 36 fixe axialement et un plateau de pression mobile 37 déplaçable axialement sous l'action d'un organe d' actionnement 38 en forme de cloche. Les deux plateaux de pression 36, 37 sont serrés l'un vers l'autre par un effort axial généré par des moyens de sollicitation élastiques qui comprennent, dans l'exemple illustré, une pluralité de ressorts de fermeture 39. Dans l'exemple illustré, les ressorts 39 sont des ressorts hélicoïdaux guidés et centrés par des pions 40 orientés axialement et fixés au voisinage de la périphérie radiale extérieure de l'élément d'entrée 25 de l'embrayage 2.

Le plateau de pression fixe 36 comporte des crans radiaux extérieurs 41 qui coopèrent avec des évidements axiaux 42 de la partie cylindrique 25a de l'élément d'entrée 25 de l'embrayage 2. Le plateau de pression fixe 36 est maintenu dans cette position par un anneau d'arrêt 43 en étant ainsi solidaire de la rotation de l'élément d'entrée 25. Le plateau de pression 36 se présente sous la forme d'un anneau métallique faisant face au plateau de pression mobile 37. Sur le plateau de pression fixe 36 est monté une pièce en tôle 45 jouant le rôle de guide de butée. Ce guide de butée 45 présente une forme cylindrique 46 dans sa partie centrale.

Le plateau de pression mobile 37 se présente également sous la forme d'un anneau métallique avec sur sa partie extérieure périphérique une coupelle 47 qui sert d'appui aux ressorts de fermeture 39 servant à la mise en pression des deux plateaux 36, 37. Le plateau de pression 37 est centré sur l'arbre primaire 3.

Un disque de friction 48 permet la transmission du couple de rotation des plateaux de pression 36, 37 à l'arbre d'entrée ou arbre primaire 3 de la boîte de vitesses. Le disque de friction 48 comprend un moyeu central 49 sur lequel est fixé un disque en tôle 50 qui lui-même porte le disque de friction proprement dit de forme annulaire supportant deux anneaux de matériau de friction 44 et entre les deux plateaux de pression 36, 37. Le moyeu central 49 présente des cannelures internes 51 qui coopèrent avec des cannelures correspondantes pratiquées sur la surface externe de l'extrémité de l'arbre primaire 3 de la boîte de vitesses de sorte que le disque de friction 48 est solidaire en rotation de l'arbre primaire 3 de la boîte de vitesses.

Des moyens d'amplification 52 de l'effort de serrage appliqué sur les plateaux 36 et 37 sont disposés entre l'élément d'entrée 25 en forme de cloche de l'embrayage 2 et le plateau de pression mobile 37.

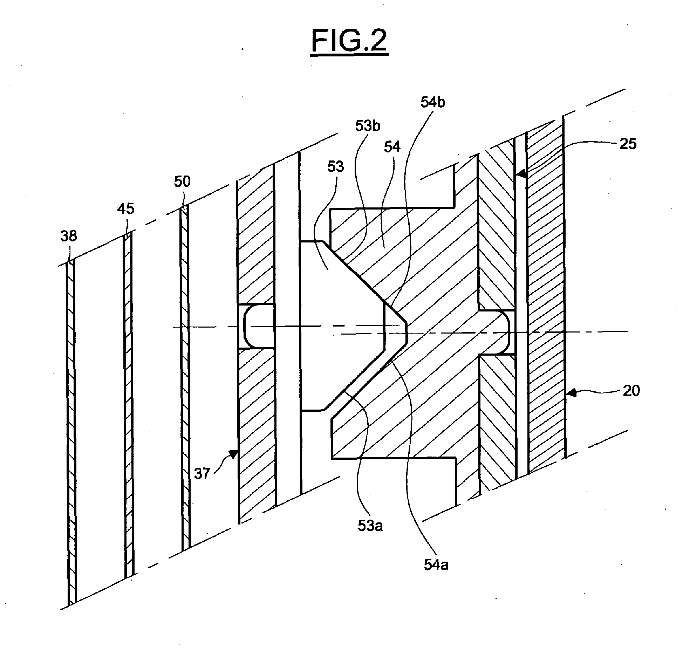

Les moyens d'amplification d'effort, qui sont visibles en coupe sur la figure 2, comprennent une pluralité d'ergots 53 solidaires du plateau de pression 37 et associés à des sièges 54 montés sur l'élément d'entrée 25 en forme de cloche. Les ergots 53 et les sièges 54 sont disposés radialement au voisinage de la partie active du disque de friction 48. Bien entendu on peut envisager de monter au contraire les ergots 53 sur l'élément d'entrée 25 et les sièges 54 sur le plateau de pression mobile 37.

Comme illustré sur la figure 2, chaque ergot 53 comprend une surface convexe comportant deux rampes inclinées 53a et 53b coopérant en correspondance de forme avec un logement de forme concave ou siège 54 formant guide et comprenant des rampes inclinées correspondantes 54a et 54b. Les rampes 53a, 53b et 54a, 54b peuvent par exemple être inclinées entre 30° et 60° par rapport à une direction de déplacement axial du plateau de pression mobile 37 relativement à l'élément d'entrée 25 en forme de cloche de l'embrayage 2.

Dans une position embrayée de l'embrayage 2, c'est-à-dire lorsque les plateaux de pression 36 et 37 sont serrés et exercent un effort de pression sur le disque de friction 48 qui se trouve entre eux comme cela est représenté sur la figure 1, le couple moteur transite via le volant 1 et l'élément d'entrée en forme de cloche 25 vers le disque de friction 48 et l'arbre primaire 3 de la boîte de vitesses. Le couple transite ainsi par l'intermédiaire des ergots 53 et des sièges 54. Lors de la transmission du couple, les rampes, par exemple 53b et 54b permettent de provoquer un coulissement du plateau de pression mobile 37 par rapport à l'élément d'entrée 25, ce qui accroît l'effort de serrage appliqué sur le disque de friction 48 serré entre le plateau de pression mobile 37 et le plateau de pression fixe 36 et qui est fixé par les crans 41 sur la portion axiale périphérique 25a de l'élément d'entrée 25 en forme de cloche. Cela accroît l'effort de serrage appliqué par les ressorts de fermeture 39 en assurant un écartement supplémentaire dans le sens axial de la cloche d'entrée 25 par rapport au plateau de pression mobile 37.

Les moyens d'amplification d'effort 52 constituent ainsi un dispositif d'auto-assistance qui permet d'atteindre une pression suffisante sur le disque de friction 48 pour transmettre le couple moteur tout en autorisant l'utilisation de ressort de fermeture 39 présentant une précharge modérée.

La commande d'ouverture de l'embrayage 2 comprend l'organe d'actionnement 38 en forme de cloche, lequel présente une portion cylindrique 55 radialement interne qui est montée autour de la portion cylindrique 46 du guide de butée 45. Sur la portion cylindrique 55 est monté un manchon en tôle 56 formant entretoise et présentant un bord radial relevé 57 pour servir de butée axiale. Un palier d'actionnement à roulement 58, dans l'exemple illustré un roulement à billes, est également monté sur la portion cylindrique 55 entre le manchon 56 et une entretoise de compensation 59 qui se présente également sous la forme d'un manchon cylindrique. L'entretoise de compensation 59 vient prendre appui axialement, sur la gauche par rapport à la figure 1, sur une rondelle élastique 60 retenue axialement par un clip d'arrêt 61 monté sur le guide de butée 45. Une rondelle de réglage 62 permet de régler la position axiale du roulement 58. La rondelle élastique 60 appuyée sur le clip d'arrêt 61 maintient en contact l'ensemble des éléments montés sur la portion tubulaire 55 et assure également le contact de l'organe d'actionnement 38 sur la coupelle 47 qui sert d'appui aux ressorts 39. La rondelle de réglage 62 est choisie de façon à positionner axialement le roulement d'actionnement 58 par rapport à la face d'appui du volant 1 sur le vilebrequin 11. De cette manière, les dispersions d'épaisseur du volant amortisseur 1 en fonction de sa fabrication se trouvent neutralisées.

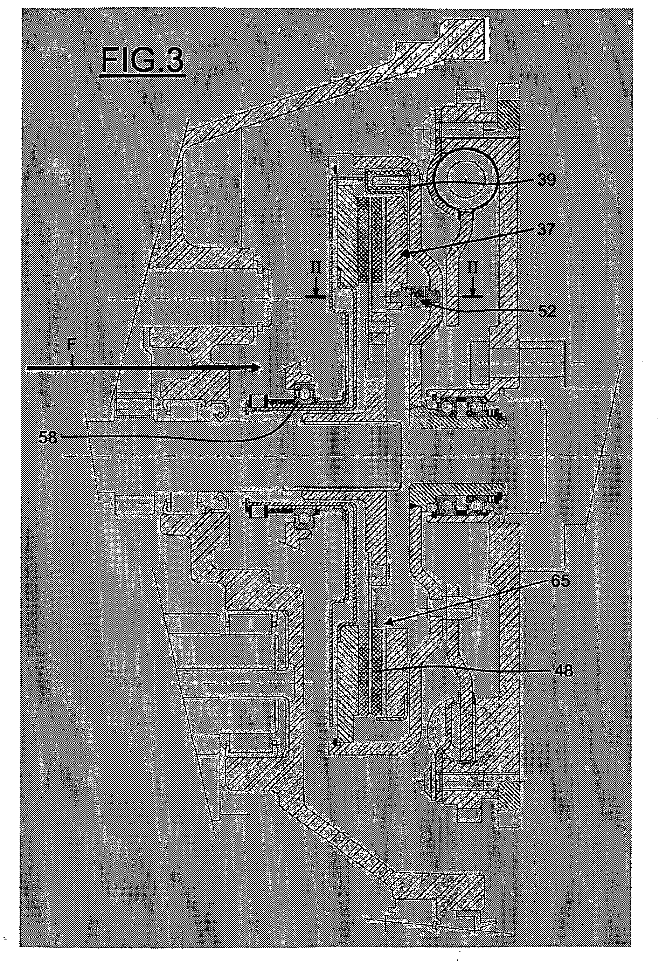

L'actionnement de l'embrayage pour passer de la position de fermeture illustrée sur la figure 1 à la position d'ouverture illustrée sur la figure 3 se fait au moyen d'une fourchette de débrayage 62 qui vient prendre appui et agir axialement sur le palier d'actionnement 58. Le jeu 63 qui subsiste au repos entre la fourchette 62 et le roulement d'actionnement 58 permet de prendre en compte les éventuelles dispersions de position relative axiale du roulement 58 dues à la dispersion de position du vilebrequin 11 par rapport à la fourchette de débrayage 64. Le jeu au repos 63 entre la fourchette de débrayage 64 et le roulement 58 représente cette dispersion ainsi que la garde d'usure de l'embrayage 2. La course de débrayage correspond d'une part au rattrapage du jeu au repos 63, et d'autre part au déplacement du plateau de pression mobile 37. L'effort de débrayage est l'effort de résistance des ressorts de fermeture 39 amplifié par les moyens d'amplification d'effort 52 lors de la transmission du couple.

On notera que l'élément d'entrée en forme de cloche 25 présente des trous de passage 64 pour permettre le serrage des vis de fixation 12 sur le vilebrequin 11 au moyen d'un outil de serrage. Des trous de passage analogues 65, 66 et 67 sont prévus en alignement, dans le moyeu 49, le guide de butée 45 et l'organe d'actionnement 38.

La figure 3 représente la position de l'embrayage 2 dans la phase de débrayage lorsqu'un effort a été appliqué dans le sens de la flèche F sur la figure 3, entraînant, par l'intermédiaire du roulement 58, un effort axial sur les ressorts de fermeture 39 qui se compriment. Le plateau de pression mobile 37 se rapproche de l'élément d'entrée 25 et s'écarte du disque de friction 48 en laissant subsister entre le disque de friction 48 et la face en regard du plateau de pression 37 un jeu d'ouverture référencé 65 sur la figure 3.

L'action sur la fourchette de débrayage 64 permet ainsi de passer de la position embrayée illustrée sur la figure 1 à la position débrayée illustrée sur la figure 3. Dans l'exemple illustré, l'embrayage 2 est en position serrée, embrayée, au repos, sous l'action des ressorts de fermeture 39. Les moyens d'amplification d'effort 52 permettent d'obtenir une auto-assistance du fonctionnement qui, combinée à l'action des ressorts de fermeture 39, permet d'atteindre une pression suffisante pour se dispenser des systèmes conventionnels de commande hydraulique d'embrayage.

## Revendications

1. Ensemble de transmission de couple pour boîte dé vitesses de véhicule automobile comprenant un embrayage (2) à disque de friction (48) et un volant amortisseur de vibrations capable d'entraîner en rotation un élément d'entrée (25) de l'embrayage, l'embrayage comprenant un plateau de pression (36) fixe axialement et un plateau de pression mobile (37) déplaçable axialement sous l'action d'un organe d'actionnement (38), les deux plateaux de pression (31, 37) enserrant le disque de friction (48) et des moyens de sollicitation élastique (39) tendant à serrer les deux plateaux de pression (36, 37) l'un vers l'autre, **caractérisé par le fait qu'**il comprend des moyens (52) d'amplification de l'effort de serrage sur le plateau de pression mobile (37) montés entre le plateau de pression mobile (37) et l'élément d'entrée (25) de l'embrayage, comprenant des ergots (53) de surface convexe comportant deux rampes inclinées (53, 53b), capables de coopérer avec des sièges (54) de forme concave comportant des rampes inclinées correspondantes (54a, 54b).

2. Ensemble de transmission de couple selon la revendication 1, dans lequel les moyens de sollicitation élastique (39) sont montés sur un organe d'actionnement (38), mobile axialement et fixé à la périphérie du plateau de pression mobile (37).

3. Ensemble de transmission de couple selon l'une des revendications précédentes dans lequel les moyens de sollicitation élastique comprennent plusieurs ressorts (39) montés entre l'élément d'entrée (25) et le plateau de pression mobile (37) de façon à exercer un effort axial tendant à écarter le plateau de pression mobile de l'élément d'entrée.

4. Ensemble de transmission de couple selon la revendication 3 dans lequel les ressorts sont des ressorts hélicoïdaux (39) montés autour de pions de centrage (40) orientés axialement.

5. Ensemble de transmission de couple selon l'une des revendications précédentes dans lequel un palier à roulement (58) capable de coopérer avec une fourchette de débrayage (62) est monté sur l'organe d'actionnement (38) avec un écartement axial par rapport au volant amortisseur (1), déterminé par une rondelle de réglage (62).

6. Ensemble de transmission de couple selon l'une des revendications précédentes dans lequel l'élément d'entrée (25) de l'embrayage est supporté par le volant amortisseur (1) par l'intermédiaire d'au moins un palier à roulement (26).

7. Ensemble de transmission de couple selon la revendication 6 dans lequel le palier à roulement (26) comprend deux roulements.

8. Ensemble de transmission de couple selon les revendications 6 ou 7 dans lequel le palier à roulement (26) est maintenu en place par un organe élastique (33) capable d'exercer une précharge axiale et tendant à rapprocher l'embrayage (2) du volant amortisseur (1).

## Claims

1. Torque transmission assembly for a motor vehicle gearbox comprising a clutch (2) with a friction plate (48) and a dual-mass flywheel which can rotate an input element (25) of the clutch, the clutch comprising an axially stationary pressure plate (36) and a mobile pressure plate (37) which can move axially due to the action of an operating member (38), the two pressure plates (36, 37) clamping the friction plate (48), and elastic pushing means (39) tending to clamp the two pressure plates (36, 37) one to the other, **characterized in that** it comprises means (52) of amplifying the clamping force on the mobile pressure plate (37) which are mounted between the mobile pressure plate (37) and the input element (25) of the clutch, comprising lugs (53) with a convex surface including two inclined surfaces (53a, 53b), which can cooperate with seats (54) of concave shape including corresponding inclined surfaces (54a, 54b).

2. Torque transmission assembly according to Claim 1, in which the elastic pushing means (39) are mounted on an operating member (38), which is axially mobile and fastened to the periphery of the mobile pressure plate (37).

3. Torque transmission assembly according to one of the preceding claims, in which the elastic pushing means comprise several springs (39) mounted between the input element (25) and the mobile pressure plate (37) so as to exert an axial force tending to move the mobile pressure plate away from the input element.

4. Torque transmission assembly according to Claim 3, in which the springs are helical springs (39) mounted about guide pins (40) which are oriented axially.

5. Torque transmission assembly according to one of the preceding claims, in which a rolling bearing (58) which can cooperate with a clutch fork (62) is mounted on the operating member (38) with an axial clearance in relation to the dual-mass flywheel (1), determined by an adjusting washer (62).

6. Torque transmission assembly according to one of the preceding claims, in which the input element (25) of the clutch is supported by the dual-mass flywheel (1) by means of at least one rolling bearing (26).

7. Torque transmission assembly according to Claim 6, in which the rolling bearing (26) comprises two races.

8. Torque transmission assembly according to Claims 6 or 7, in which the rolling bearing (26) is held in place by an elastic member (33) which can exert an axial preload and which tends to move the clutch (2) closer to the dual-mass flywheel (1).

## Patentansprüche

1. Drehmomentübertragungsanordnung für ein Kraftfahrzeuggetriebe mit einer Kupplung (2), die eine Reibscheibe (48) und ein Schwingungsdämpfungsschwungrad umfasst, das ein Kupplungseingangselement (25) in Drehung versetzen kann, wobei die Kupplung eine axial festgelegte Druckplatte (36) und eine bewegliche Druckplatte (37), die unter Wirkung eines Betätigungsglieds (38) in Axialrichtung bewegt werden kann, umfasst, wobei die beiden Druckplatten (36, 37) die Reibscheibe (48) einklemmen und elastische Vorspannungsmittel (39) die beiden Druckplatten (36, 37) gegeneinander zu klemmen suchen, **dadurch gekennzeichnet, dass** sie Mittel (52) zur Verstärkung der Klemmkraft an der beweglichen Druckplatte (37) umfasst, die zwischen der beweglichen Druckplatte (37) und dem Kupplungseingangselement (25) angebracht sind und Nasen (53) mit einer konvexen Fläche mit zwei geneigten Rampen (53a, 53b) umfassen, die mit Sitzen (54) konkaver Form, die entsprechend geneigte Rampen (54a, 54b) aufweisen, zusammenwirken können.

2. Drehmomentübertragungsanordnung nach Anspruch 1, wobei die elastischen Vorspannungsmittel (39) an einem Betätigungsglied (38) angebracht sind, das axial beweglich und am Umfang der beweglichen Druckplatte (37) angebracht ist.

3. Drehmomentübertragungsanordnung nach einem der vorhergehenden Ansprüche, wobei die elastischen Vorspannungsmittel mehrere Federn (39) umfassen, die zwischen dem Eingangselement (25) und der beweglichen Druckplatte (37) angebracht sind, um eine Axialkraft auszuüben, die die bewegliche Druckplatte und das Eingangselement voneinander zu beabstanden sucht.

4. Drehmomentübertragungsanordnung nach Anspruch 3, wobei die Federn Schraubenfedern (39) sind, die um axial ausgerichtete Zentrierstifte (40) herum angebracht sind.

5. Drehmomentübertragungsanordnung nach einem der vorhergehenden Ansprüche, wobei ein Wälzlager (58), das mit einer Ausrückgabel (62) zusammenwirken kann, mit einem durch eine Einstellscheibe (62) bestimmten axialen Abstand bezüglich des Dämpfungsschwungrads (1) an dem Betätigungsglied (38) angebracht ist.

6. Drehmomentübertragungsanordnung nach einem der vorhergehenden Ansprüche, wobei das Kupplungseingangselement (25) durch das Dämpfungsschwungrad (1) mittels mindestens eines Wälzlagers (26) gestützt wird.

7. Drehmomentübertragungsanordnung nach Anspruch 6, wobei das Wälzlager (26) zwei Rollen enthält.

8. Drehmomentübertragungsanordnung nach den Ansprüchen 6 oder 7, wobei das Wälzlager (26) durch ein elastisches Glied (33) festgehalten wird, das eine axiale Vorbelastung ausüben kann und sucht, die Kupplung (2) an das Dämpfungsschwungrad (1) anzunähern.
